# EUROPÄISCHE PATENTSCHRIFT

(11) **EP 1 436 108 B1**
(45) Veröffentlichungstag und Bekanntmachung des Hinweises auf die Patenterteilung: **12.04.2006**
(21) Anmeldenummer: 02782899.5
(22) Anmeldetag: 14.10.2002
(51) Int. Cl.: B23B 29/034

(54) **PLANDREHKOPF**
FACING HEAD
TETE DE SURFACAGE

(30) Priorität: 18.10.2001 DE 10151528
(43) Veröffentlichungstag der Anmeldung: 14.07.2004
(73) Patentinhaber: Dörries Scharmann Technologie GmbH, 41236 Mönchengladbach (DE)
(72) Erfinder: BROADLEY, John, Stewart, Huddersfield, HD89EH (GB)
(74) Vertreter: Rehders, Jochen
(86) Internationale Anmeldenummer: PCT/EP2002/011460
(87) Internationale Veröffentlichungsnummer: WO 2003/035309

(56) Entgegenhaltungen:
- DE-A- 3 801 507
- DE-B- 1 099 308
- DE-C- 880 087
- DE-U- 8 403 099
- US-A- 4 741 230
- US-A- 5 651 645

## Beschreibung

Die Erfindung betifft eine Senkrechtdrehmaschine mit einem nicht drehbaren Werkzeugschieber, einer im Werkzeugschieber angeordneten, drehend antreibbaren Werkzeugspindel und einem an den Werkzeugschieber angesetzten Vorsatzkopf.

Bekannte Vorsatzköpfe dieser Art dienen an Senkrechtdrehmaschinen dazu, den Ausnutzungsgrad zu vergrößern, indem beispielsweise Planflächen mittels eines drehend angetriebenen Fräskopfes bearbeitet werden, oder um Bohrungen, insbesondere Gewindebohrungen im auf der Planscheibe angeordneten Werkstück bei stillstehender Planscheibe anzubringen. Für diese drehend angetriebenen Werkzeuge ist eine Werkzeugspindel im Werkzeugschieber angeordnet, die sich mit dem Werkzeug im Vorsatzkopf kuppeln läßt.

Für das drehende Bearbeiten eines auf der Planscheibe rotierenden Werkstücks wird ein entsprechendes Drehwerkzeug am Drehwerkzeugschieber angesetzt, dessen Vorschub in waagerechter und senkrechter Richtung durch entsprechende Bewegung des Werkzeugschiebers bewirkt wird. In diesem Fall erfolgt die Werkstückbearbeitung mittels eines Drehwerkzeugs, wodurch die Bearbeitungszeit bestimmt wird. Hinzu kommt, daß bei der Bearbeitung von Bohrungen im Werkstück Abdrängkräfte in Richtung zur Drehachse entstehen, die die Bearbeitungsgenauigkeit beeinflussen, da die durch die Abdrängkräfte bewirkte Verformung des Werkzeugschiebers umso größer ist, je weiter der Werkzeugschieber aus seinem Schlitten ausgefahren ist. Zwar wird versucht, diesem Umstand durch entsprechende Dimensionierung des Werkzeugschiebers und seiner Lagerung Rechnung zu tragen, jedoch ist hierfür nur ein Kompromiß, ohne die Abmessungen und das Gewicht einer Senkrechtdrehmaschine mit vorgegebenen Abmessungen der Planscheibe in unzuträglicher Weise zu vergrößern, möglich.

Der Erfindung liegt somit das Problem zugrunde, an einer Senkrechtdrehmaschine mit einer Werkzeugspindel im Werkzeugschieber einen Vorsatzkopf vorzusehen, mit dem sich die Bearbeitungszeit von Bohrungen bei gleichzeitiger Kompensation der Abdrängkräfte, verringern läßt.

Dieses Problem wird an einer Werkzeugmaschine der eingangs erwähnten Art erfindungsgemäß dadurch gelöst, daß zwei im bezüglich des Werkzeugschiebers feststehenden Vorsatzkopf entgegengesetzt radial verstellbare, jeweils eine Werkzeugaufnahme aufweisende Arbeitsschieber und eine eine radiale Zustellbewegung der Arbeitsschieber bewirkende Antriebsverbindung zwischen der Werkzeugspindel und den Arbeitsschiebern vorgesehen ist.

Durch die gleichzeitige Bearbeitung einer Bohrung in einem auf der Planscheibe der Senkrechtdrehmaschine rotierenden Werkstück mittels zwei Drehwerkzeugen läßt sich die Bearbeitungszeit zumindest theoretisch halbieren und ergibt sich eine vollständige Kompensation der Abdrängkräfte, da die Werkzeugschneiden um 180° versetzt zueinander angeordnet sind.

Die Verstellbewegung der Arbeitsschieber erfolgt über die Werkzeugspindel, die hierfür ausschließlich drehend betätigt wird.

Für die radiale Zustellbewegung der Arbeitsschieber ist somit keine Zusatzeinrichtung in Form einer durch den Werkzeugschieber geführten Betätigungsstange oder eines im Vorsatzkopf anzuordnenden Vorschubantriebes erforderlich, so daß sich der Vorsatzkopf an jeder Drehmaschine mit einem nicht drehbaren Werkzeugschieber und einer darin angeordneten, drehend antreibbaren Werkzeugspindel einsetzen läßt.

Zwar ist aus der EP 0 717 671 B1 ein Plandrehkopf mit zwei Arbeitsschiebern bekannt, die gemeinsam in Gegenrichtung parallel zueinander verschiebbar sind. Herbei handelt es sich jedoch um einen drehend angetriebenen Plandrehkopf, der an der Spindel einer Werkzeugmaschine befestigbar ist, und die Verschiebung der Arbeitsschieber erfolgt über eine in der Spindel der Werkzeugmaschine angeordnete, zusätzliche Stellstange, so daß der in der EP 0 717 671 B1 beschriebene Plandrehkopf nur an einer eigens dafür konzipierten Werkzeugmaschine verwendbar ist. Zudem stellt die erforderliche Stellstange einen erheblichen Mehraufwand in der Maschine dar und ist darüberhinaus konstruktiv gerade bei hohen Drehzahlen der Arbeitsspindel problematisch (Wuchtprobleme etc.).

Auch in derDE 196 05 156 A1 ist ein drehend angetriebener Werkzeugkopf beschrieben, der zwar keine Betätigungseinrichtung in der Werkzeugmaschine erfordert, der jedoch mit einem eigenen Antrieb für eine Positioniereinrichtung versehen ist

Die Antriebsverbindung läßt sich sehr einfach gestalten und kann entweder aus einer mit der Werkzeugspindel kuppelbaren Spindel im Vorsatzkopf, einem Zahnrad an der Spindel im Bereich der Arbeitsschieber und damit in Eingriff befindlichen Verzahnungen an den Arbeitsschiebern bestehen oder aber aus einer mit der Werkzeugspindel kuppelbaren Mutter, einer mit der Mutter zusammenwirkenden, axial verstellbaren Gewindespindel und gegenläufigen, mit entsprechenden Schrägverzahnungen an den Arbeitsschiebern zusammenwirkenden Schrägverzahnungen an einem abgeflachten Zahnstangenteil der Gewindespindel, bestehen.

In beiden Fällen bewirkt die Drehbewegung der Werkzeugspindel in einfacher, kinematischer Umsetzung die Radialbewegung der Arbeitsschieber und damit der Bearbeitungswerkzeuge, und diese Antriebsverbindung läßt sich weitgehend spielfrei und mit geringen Reibungsverlusten bei gleichzeitig robustem Aufbau gestalten.

Vorzugsweise kann bei der Ausführungsform mit Schrägverzahnungen am Zahnstangenteil der Gewindespindel und entsprechenden Schrägverzahnungen an den Arbeitsschiebern der Winkel der Schrägverzahnungen so gewählt sein, das einem Axialverstellweg der Gewindespindel von 1 mm ein Radialverstellweg der Arbeitsschieber von jeweils 0,5 mm entspricht, so daß eine Axialverstellung der Gewindespindel um 1 mm eine Durchmesservergrößerung oder -verkleinerung der zu bearbeitenden Bohrung ebenfalls um 1 mm ergibt.

Bei der erfindungsgemäßen Drehmaschine läßt sich der Vorsatzkopf vorteilhafterweise in gleicher Weise wie ein Vorsatzkopf für ein drehend angetriebenes Werkzeug in eine Werkzeugaufnahme am Werkzeugschieber zur automatischen Aufnahme eines entsprechend angepaßten Halteteils einsetzen, wobei die Kupplung zwischen der Werkzeugspindel und einem entsprechendem Element der Antriebsverbindung über einen genormten Werkzeugkonus erfolgt.

Die Erfindung wird nachstehend anhand eines in der Zeichnung dargestellten Ausführungsbeispiels des näheren erläutert.

In der Zeichnung zeigen:
- Fig. 1: eine schematische Darstellung eines Vorsatzkopfes an einem Werkzeugschieber, teilsweise im Schnitt,
- Fig. 2: einen Querschnitt entlang der Linie II - II in Fig. 1 und
- Fig. 3: eine Darstellung analog zur Fig. 1 mit einer anderen Ausführungsform der Antriebsverbindung zwischen der Werkzeugspindel und den Arbeitsschiebern.

Von einer Senkrechtdrehmaschine ist nur der Endbereich eines senkrecht geführten Werkzeugschiebers 1 dargestellt. Im Werkzeugschieber 1 ist eine drehend antreibbare Werkzeugspindel 2 in einer Schiebehülse 3 gelagert.

Innerhalb der Werkzeugspindel sind in bekannter Weise eine Spannzange 4 und eine Spannstange 5 angeordnet, mit Hilfe derer sich ein genormter Werkzeugkonus 10 in einer konischen Aufnahme 6 der Werkzeugspindel 2 einspannen und auch wieder lösen läßt.

Ein Vorsatzlcopf 8 ist mit einem Adapter 7 versehen, der es erlaubt, den Vorsatzkopf 8 in gleicher Weise wie einen Vorsatzkopf für ein drehend durch die Werkzeugspindel 2 antreibbares Werkzeug am Werkzeugschieber 1 zu befestigen. Hierzu wird ein im einzelnen nicht beschriebener Fortsatz des Adapters 7 in einer Werkzeugaufnahme 19 am Werkzeugschieber 1 undrehbar gehalten.

Der Vorsatzkopf 8 ist mit dem Adapter 7 verschraubt und weist eine mit der Werkzeugspindel 2 kuppelbare, drehbar gelagerte Buchse 9 auf In dieser Buchse 9 ist eine Mutter 11 angeordnet, die mit einer koaxialen Gewindespindel 12 zusammenwirkt. Wird die Werkzeugspindel 2 gedreht, dreht sich die Mutter 11 mit, während die stillstehende Gewindespindel 12 je nach Drehrichtung der Werkzeugspindel 2 aufwärts oder abwärts bewegt wird. Ein Zahnstangenteil 13 mit einer Schrägverzahnung 14, der mit der Gewindespindel 12 verbunden ist, ragt zwischen parallel in entsprechenden Führungen des Vorsatzkopfes 8 geführten Arbeitsschiebern 15, und die beiderseitigen, entgegengesetzt gerichteten Verzahnungen 14 befinden sich im Eingriff mit entsprechenden Verzahnungen 16 an den Arbeitsschiebern.

Aus der durch die Drehung der Werkzeugspindel 2 bewirkten Auf- und Abbewegung der Gewindespindel 12 und des damit verbundenen Zahnstangenteils 13 wird somit eine radiale Zustellbewegung der Arbeitsschieber 15, an denen in einer Werkzeugaufnahme 17 ein Beabeitungswerkzeug 18, im vorliegenden Fall eine Schneidplatte, angeordnet ist, bewirkt.

Der Eingriff der Schrägverzahnung 14 am Zahnstangenteil 13 mit den Schrägverzahnungen 16 an den Arbeitsschiebern 15 läßt sich weitgehend spielfrei gestalten, so daß sich eine genaue Zuordnung zwischen der Axialbewegung der Gewindespindel 12 mit dem Zahnstangenteil 13 und der Radialbewegung der Arbeitsschieber 15 erreichen läßt. Der Winkel der Schrägverzahnungen 14 und 16 läßt sich vorteilhafterweise so bestimmen, daß einer Axialbewegung der Gewindespindel 12 mit dem Zahnstangenteil 13 von 1 mm eine Radialbewegung jedes Arbeitsschiebers 15 von 0,5 mm entspricht, so daß sich aus einer Axialbewegung von 1 mm eine Durchmesserveränderung von ebenfalls 1 mm ergibt. Vorteilhaft läßt sich auch ein direktes Wegmeßsystem im Bereich der Arbeitsschieber anordnen, das eine direkte Erfassung der Stellbewegung ermöglicht und so eine höhere Positioniergenauigkeit erlaubt.

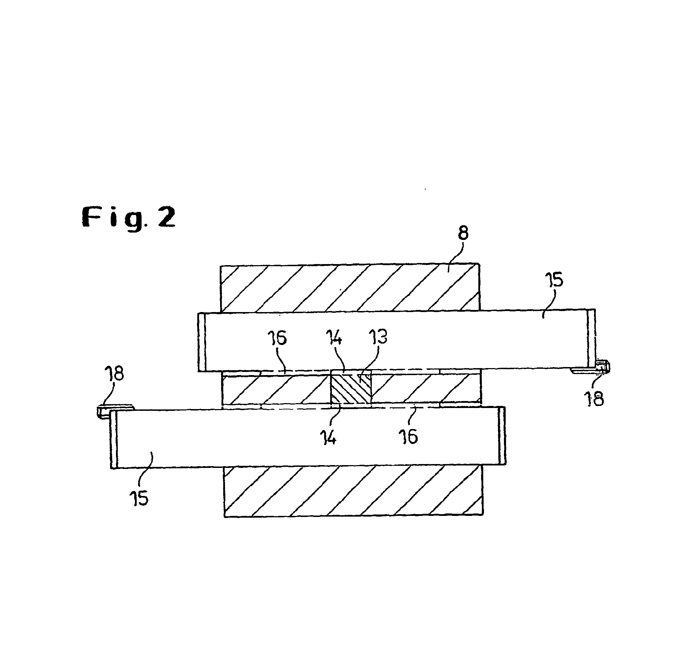

Aus der Darstellung in Fig. 2 ergibt sich, daß der Zahnstangenteil 13 quadratisch ausgebildet ist, jedoch ist es selbstverständlich auch möglich, diesen Zahnstangenteil 13 erheblich breiter zu gestalten, um die Verstellkräfte auf eine größere Anzahl von Zähnen zu verteilen.

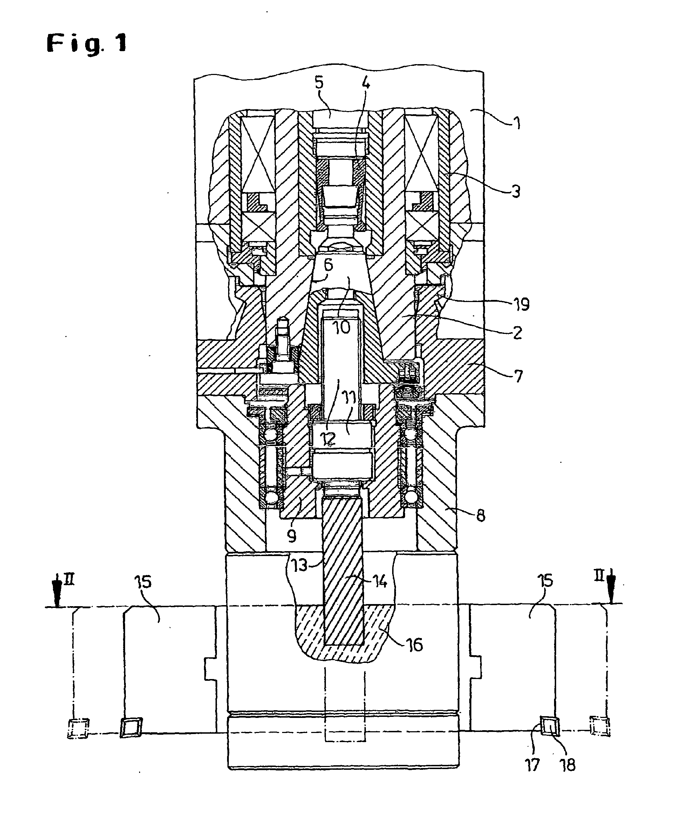

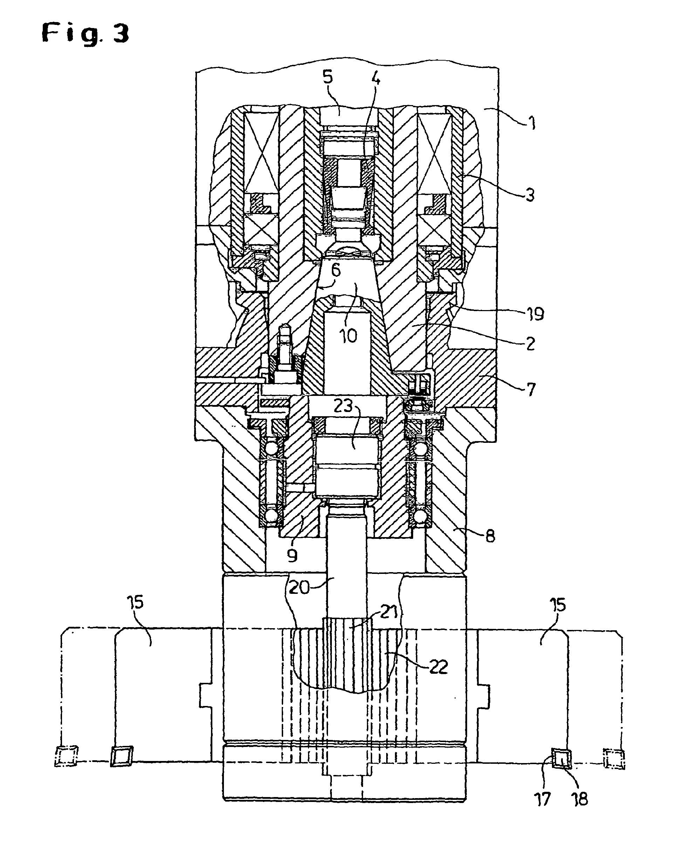

Die Ausführungsform gemäß Fig. 3 unterscheidet sich von der gemäß Fig. 1 und 2 dadurch, daß eine über eine Kupplung 23 mit der Buchse 9, den Werkzeugkonus 10 mit der Werkzeugspindel 2 drehbar gekuppelte Spindel 20 im Bereich der Arbeitsschieber 15 ein Zahnrad 21 aufweist, das mit entsprechenden Verzahnungen 22 an den Arbeitsschiebern 15 zusammenwirkt. Bei dieser Ausführungsform wird somit die Drehbewegung der Arbeitsspindel 2 über das Zahnrad 21 und die Verzahnung 22 an den Arbeitsschiebern 15 direkt in eine Radialverschiebung der Arbeitsschieber 15 umgewandelt.

Da der Vorsatzkopf vollkommen symmetrisch aufgebaut ist, erfolgt eine vollständige Kompensation der auf die Schneidplatten 18 wirkenden radial gerichteten Abdrängkräfte, so daß keinerlei Verformung des Werkzeugschiebers 1 beim Bearbeiten von Bohrungen auftritt, unabhängig davon, wie weit der Werkzeugschieber 1 aus seinem Schlitten ausgefahren ist.

## Patentansprüche

1. Senkrechtdrehmaschine mit
- einem nicht drehbaren Werkzeugschieber (1),
- einer im Werkzeugschieber (1) angeordneten, drehend antreibbaren Werkzeugspindel (2),
- eine an dem Werkzeugschieber (1) undrehbar angesetzten Vorsatzkopf (8),
- zwei im Vorsatzkopf (8) entgegengesetzt, radial verstellbar angeordneten, jeweils eine Werkzeugaufnahme (17) aufweisenden Arbeitsschiebern (15) und
- einer, eine radiale Zustellbewegung der Arbeitsschieber (15) bewirkenden Antriebsverbindung (11, 12, 13, 14, 16, 20, 21, 22) zwischen der Werkzeugspindel (2) und, den Arbeitsschiebern.

2. Senkrechtdrehmaschine nach Anspruch 1, bei der die Antriebsverbindung aus einer mit der Werkzeugspindel (2) kuppelbaren Spindel (20) im Vorsatzkopf (8), einem Zahnrad (21) an der Spindel (20) im Bereich der Arbeitsschieber (15) und damit in Eingriff befindlichen Verzahnungen (22) an den Arbeitsschiebern (15) besteht.

3. Senkrechtdrehmaschine nach Anspruch 1, bei der die Antriebsverbindung aus einer mit der Werkzeugspindel (2) kuppelbaren Mutter (11), einer mit der Mutter (11) zusammenwirkenden, axial verstellbaren Gewindespindel (12) und gegenläufigen, mit entsprechenden Schrägverzahnungen (16) an den Arbeitsschiebern (15) zusammenwirkenden Schrägverzahnungen (14) an einem abgeflachten Zahnstangenteil (13) der Gewindespindel (13) besteht.

4. Senkrechtdrehmaschine nach Anspruch 3, bei der die Winkel der Schrägverzahnungen (14, 16) an den Arbeitsschiebern (15) und am Zahnstangenteil (13) so gewählt sind, daß einem Axialverstellweg der Gewindespindel (12) von 1 mm ein Radialverstellweg der Arbeitsschieber (15) von jeweils 0,5 mm entspricht.

5. Senkrechtdrehmaschine nach einem der Ansprüche 1 bis 4, bei der eine Werkzeugaufnahme (19) am Werkzeugschieber (1) zur automatisierten Aufnahme eines entsprechend angepaßten Halteteils (7) des Vorsatzkopfes (8) eingerichtet ist und die Kupplung zwischen der Werkzeugspindel (2) und einem entsprechenden Element (9) der Antriebsverbindung (11, 12, 14, 16; 20, 21, 22) über einen genormten Werkzeugkonus (10) erfolgt.

6. Senkrechtdrehmaschine nach einem der Ansprüche 1 bis 5, bei der im Bereich der Arbeitsschieber ein direktes Wegmeßsystem angeordnet ist.

## Claims

1. A vertical lathe, comprising
- a non-rotatable tool slide (1),
- a rotationally drivable tool spindle (2) arranged in the tool slide (1),
- an auxiliary head (8) attached non-rotatably to the tool slide (1),
- two radially adjustable working slides (15) opposing one another in the auxiliary head (8) which each have a tool-holding fixture (17), and
- a drive connection (11, 12, 13, 14, 16; 20, 21, 22) between the tool spindle (2) and the working slides which brings about a radial feed motion of the working slides (15).

2. A vertical lathe according to Claim 1, in which the drive connection consists of a spindle (20) in the auxiliary head (8) which can be coupled to the tool spindle (2), a toothed wheel (21) on the spindle (20) in the region of the working slides (15) and teeth (22) engaged therewith on the working slides (15).

3. A vertical lathe according to Claim 1, in which the drive connection consists of a nut (11) which can be coupled to the tool spindle (2), an axially adjustable threaded spindle (12) which cooperates with the nut (11) and opposing helical gearing (14) which cooperates with corresponding helical gearing (16) on the working slides (15) on a flattened rack part (13) of the threaded spindle (13).

4. A vertical lathe according to Claim 3, in which the angles of the helical gearing (14, 16) on the working slides (15) and on the rack part (13) are selected such that a radial adjustment path of the working slides (15) of 0.5 mm in each case corresponds to an axial adjustment path of the threaded spindle (12) of 1 mm.

5. A vertical lathe according to one of Claims 1 to 4, in which a tool-holding fixture (19) is arranged on the tool slide (1) for automated holding of a correspondingly adapted holding part (7) of the auxiliary head (8) and the tool spindle (2) and a corresponding element (9) of the drive connection (11, 12, 14, 16; 20, 21, 22) are coupled by means of a standardised tool cone (10).

6. A vertical lathe according to one of Claims 1 to 5, in which a direct path measuring system is arranged in the region of the working slides.

## Revendications

1. Tour vertical comportant
- un coulisseau d'outil (1) non rotatif,
- une broche à outil (2) pouvant être entraînée en rotation et disposée dans le coulisseau d'outil (1),
- une tête rapportée (8) placée non rotative sur le coulisseau d'outil (1),
- deux coulisseaux de travail (15) disposés déplaçables radialement en sens opposés dans la tête rapportée (8) et comportant chacun un logement d'outil (17), et
- une liaison en entraînement (11, 12, 13, 14, 16 ; 20, 21, 22) entre la broche à outil (2) et les coulisseaux de travail et provoquant un mouvement d'avance radial des coulisseaux de travail (15).

2. Tour vertical selon la revendication 1, dans lequel la liaison en entraînement est constituée d'une broche (20), pouvant être accouplée à la broche à outil (2), dans la tête rapportée (8), un pignon denté (21) sur la broche (20) dans la zone des coulisseaux de travail (15) et des dentures (22), engrenant avec celle-ci, sur les coulisseaux de travail (15).

3. Tour vertical selon la revendication 1, dans lequel la liaison en entraînement est constituée d'un écrou (11) pouvant être accouplé à la broche à outil (2), d'une broche filetée (12) déplaçable axialement et coopérant avec l'écrou (11) ainsi que de dentures obliques (14) de sens contraires, coopérant avec des dentures obliques (16) correspondantes des coulisseaux de travail (15), sur une partie de crémaillère (13) aplatie de la broche filetée (13).

4. Tour vertical selon la revendication 3, dans lequel les angles des dentures obliques (14, 16) des coulisseaux de travail (15) et de la partie de crémaillère (13) sont choisis de manière qu'une course de déplacement radiale des coulisseaux de travail (15) de 0,5 mm corresponde à une course de déplacement axiale de la broche filetée (12) de 1 mm.

5. Tour vertical selon l'une des revendications 1 à 4, dans lequel un logement d'outil (19) sur le coulisseau d'outil (11) est aménagé pour la réception automatisée d'un élément de maintien (7) adapté en conséquence de la tête rapportée (8), et l'accouplement entre la broche à outil (2) et un élément correspondant (9) de la liaison en entraînement (11, 12, 14, 16 ; 20, 21, 22) s'effectue par un cône d'outil (10) normalisé.

6. Tour vertical selon l'une des revendications 1 à 5, dans lequel un système de mesure direct de distance est disposé dans la zone des coulisseaux de travail.
